# EUROPEAN PATENT APPLICATION

(11) **EP 1 993 048 A1**
(43) Date of publication of application: **19.11.2008**
(21) Application number: 08008701.8
(22) Date of filing: 09.05.2008
(51) Int. Cl.: G06F 17/30

(54) **GPS recorder capable of attaching positional information to image file**

(30) Priority: 09.05.2007 TW 96207452 U
(71) Applicant: ATP Electronics Taiwan Inc., Neihu Taipei City 114 (TW)
(72) Inventor: Hsieh, Tim, Guanyin Township Taoyuan County 328 (TW); Kuo, Yu-Yin, Neihu District Taipei City 114 Taiwan (TW)
(74) Representative: Becker, Bernd

(57) **Abstract**

The invention discloses a GPS recorder comprising a GPS receiver, a memory, a card connector, and a USB OTG controller. The GPS receiver is used for receiving a plurality of positional information and a plurality of first time information. The memory is used for storing the positional information and the first time information. The card connector is used for connecting with a memory card, wherein an image file with a second time information is stored in the memory card. When the memory card is connected to the card connector of the GPS recorder by a user, the USB OTG controller retrieves one of the first time information corresponding to the second time information and then attaches the positional information corresponding to the retrieved first time information to the image file.

## Description

### BACKGROUND OF THE INVENTION

### 1. Field of the invention

The invention relates to a global positioning system (GPS) recorder; in particular, it relates to a GPS recorder capable of attaching positional information to an image file.

### 2. Description of the prior art

With the advance of technology, more and more applications of GPS have been developed. GPS can be used for car navigation; besides, GPS integrated in a camera can record longitude and latitude information of where the photo is taken. Nowadays, a GPS recorder for recording positional and time information of where the user locates has been developed. After taking pictures at various places, both information recorded by the GPS recorder and photos can be inputted into a computer; moreover, positional information of a photo can be attached to the photo. Afterward, users can upload the photo attached with positional information to Google Map or Google Earth website. Accordingly, the relation between places and photos can be presented by Google Map and Google Earth websites.

However, the GPS recorder nowadays does not have a USB On-The-Go (OTG) controller, so the memory card therein storing image files cannot be directly connected to the GPS recorder, and an electronic apparatus (e.g. a digital camera or a card reader) with a memory card cannot be directly connected to the GPS recorder, either. That is to say, when a photo is taken by users, positional information can not be immediately attached to the photo by utilizing a conventional GPS recorder. If users want to attach positional information to the photo (e.g. an image file), an independent device such as a computer is required. In other words, users must utilize computer and take additional time to attach positional information received from the GPS recorder to the photo. It is not convenient for users at all.

Therefore, the main scope of the invention is to provide a GPS recorder capable of attaching positional information to image files, so as to solve the aforesaid problems.

### SUMMARY OF THE INVENTION

A scope of the invention is to provide a GPS recorder comprising a USB OTG controller. When a memory card therein storing image files is connected to a card connector of the GPS recorder, the GPS recorder will automatically attach positional information to each image file in the memory card.

Another scope of the invention is to provide a GPS recorder comprising a USB OTG controller. When an electronic apparatus with a memory card is connected to a USB host port of the GPS recorder, the GPS recorder will automatically attach positional information to each image file in the memory card.

According to an embodiment of the invention, the GPS recorder comprises a GPS receiver, a memory, a card connector and a USB OTG controller. The GPS receiver is used for receiving a plurality of positional information and a plurality of first time information, wherein each of the positional information corresponds to one of the first time information. The memory is used for storing the positional information and the first time information. The card connector is used for connecting with a memory card, wherein an image file with a second time information is stored in the memory card.

In this embodiment, when the memory card is connected to the card connector of the GPS recorder, the USB OTG controller retrieves one of the first time information corresponding to the second time information of an image file and then attaches the positional information corresponding to the retrieved first time information to the image file.

According to another embodiment of the invention, the GPS recorder comprising a GPS receiver, a memory, a USB host port and a USB OTG controller. The GPS receiver is used for receiving a plurality of positional information and a plurality of first time information, wherein each of the positional information corresponds to one of the first time information. The memory is used for storing the positional information and the first time information. The USB host port is used for connecting with an electronic apparatus, wherein a memory card is installed in the electronic apparatus, and at least one image file with a second time information is stored in the memory card.

In this embodiment, when the electronic apparatus is connected to the USB host port, the USB OTG controller retrieves one of the first time information corresponding to the second time information of an image file and then attaches the positional information corresponding to the retrieved first time information to the image file.

Therefore, according to the GPS recorder of the invention, the memory card therein storing image files can be directly connected to the GPS recorder, or an electronic apparatus with a memory card can be directly connected to the GPS recorder. That is to say, when a photo is taken by users, positional information can be immediately attached to the photo by utilizing the GPS recorder of the invention instead of a computer. It is very convenient for users.

The advantage and spirit of the invention may be understood by the following recitations together with the appended drawings.

### BRIEF DESCRIPTION OF THE APPENDED DRAWINGS

FIG. 1 is a functional block diagram illustrating a GPS recorder according to an embodiment of the invention.

FIG. 2 is a functional block diagram illustrating a GPS recorder according to another embodiment of the invention.

FIG. 3 is a functional block diagram illustrating a GPS recorder according to another embodiment of the invention.

### DETAILED DESCRIPTION OF THE INVENTION

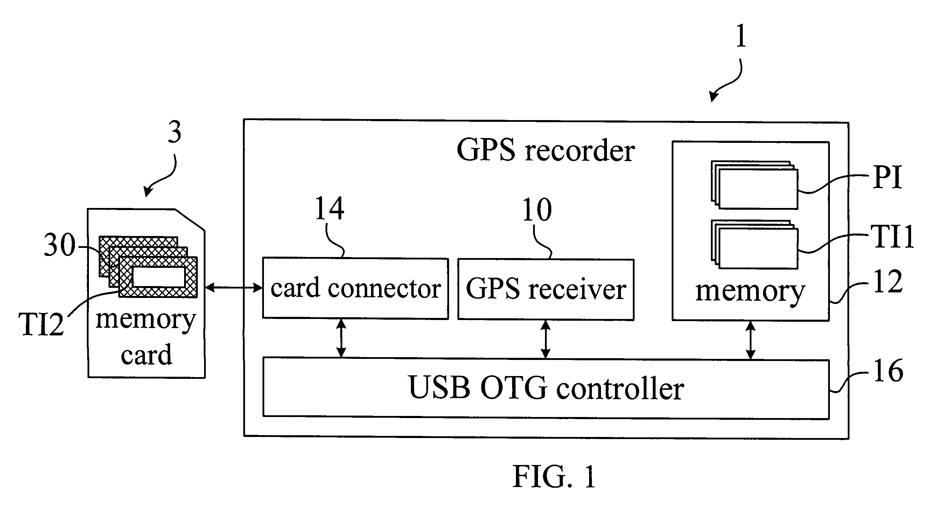

Please refer to FIG. 1. FIG. 1 is a functional block diagram illustrating a GPS recorder 1 according to an embodiment of the invention. The GPS recorder 1 comprises a GPS receiver 10, a memory 12, a card connector 14 and a USB OTG controller 16. The memory 12 can be a non-volatile memory, such as a flash memory.

In this embodiment, the GPS receiver 10 is used for receiving a plurality of positional information PI and a plurality of time information TI1, wherein each of the positional information PI corresponds to one of the time information TI1. In particular, each of the positional information PI may comprise a coordinate and/or a place name, and each of the time information TI1 may comprise a date and/or a time. The positional information PI and the time information TI1 received by the GPS receiver 10 are stored in the memory 12, as shown in FIG. 1.

When a user took pictures at various places, a plurality of image files 30 will be stored in the memory card 3, wherein each of the image files 30 has time information TI2. As shown in FIG. 1, when the memory card 3 is connected to the card connector 14 of the GPS recorder 1, the USB OTG controller 16 retrieves one of the time information TI1 corresponding to the second time information TI2 of an image file 30 and then attaches the positional information PI corresponding to the retrieved time information TI1 to the image file 30.

For example, the memory card 3 stores an image file 30 with time information TI2 of "12:30 pm, 1/1/2007". The memory 12 of the GPS recorder 1 stores the following information including 1) time information TI1 of "12:30 pm, 1/1/2007" corresponding to positional information PI of "Taipei"; 2) time information TI1 of "1:30 pm, 1/1/2007" corresponding to positional information PI of "Taoyuan"; and 3) time information TI1 of "2:30 pm, 1/1/2007" corresponding to positional information PI of "Hsinchu". When the memory card 3 is connected to the card connector 14 of the GPS recorder 1, the USB OTG controller 16 will attach the positional information "Taipei" to the image file 30 accordingly.

In other words, the memory card 3 therein storing image files 30 can be directly connected to the GPS recorder 1. That is to say, when a photo is taken by users, positional information can be immediately attached to the photo by utilizing the GPS recorder 1 of the invention instead of a computer.

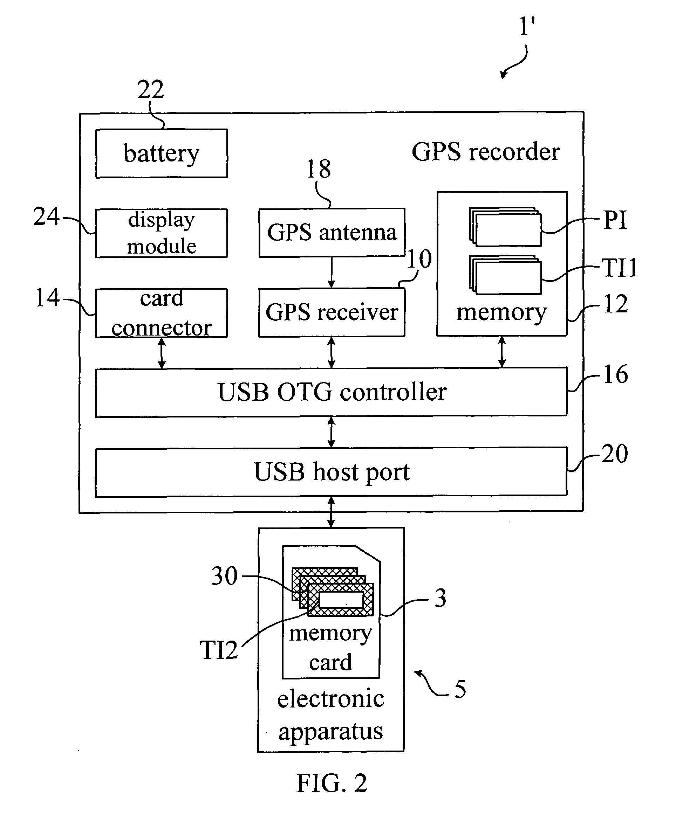

Please refer to FIG. 2. FIG. 2 is a functional block diagram illustrating a GPS recorder 1' according to another embodiment of the invention. The main difference between the GPS recorder 1' and the GPS recorder 1 is that the GPS recorder 1' further comprises a GPS antenna 18, a USB host port 20, a battery 22 and a display module 24. The GPS antenna 18 is coupled to the GPS receiver 10. The battery 22 is used for supplying power to the GPS recorder 1'. The display module 24 is used for displaying information related to the GPS recorder 1' or the memory card 3. The display module 24 can be a liquid crystal display (LCD) or other displays.

The USB host port 20 is used for connecting with an electronic apparatus 5, such as a camera, a card reader and so on. The memory card 3 can be installed in the electronic apparatus 5. When the electronic apparatus 5 is connected to the USB host port 20, the USB OTG controller 16 retrieves one of the time information TI1 from the memory 12 corresponding to the time information TI2 of an image file 30 and then attaches the positional information PI corresponding to the retrieved time information TI1 to the image file 30.

In other words, the electronic apparatus 5 with the memory card 3 can be directly connected to the GPS recorder 1. That is to say, when a photo is taken by users, positional information can be immediately attached to the photo by utilizing the GPS recorder 1 of the invention instead of a computer.

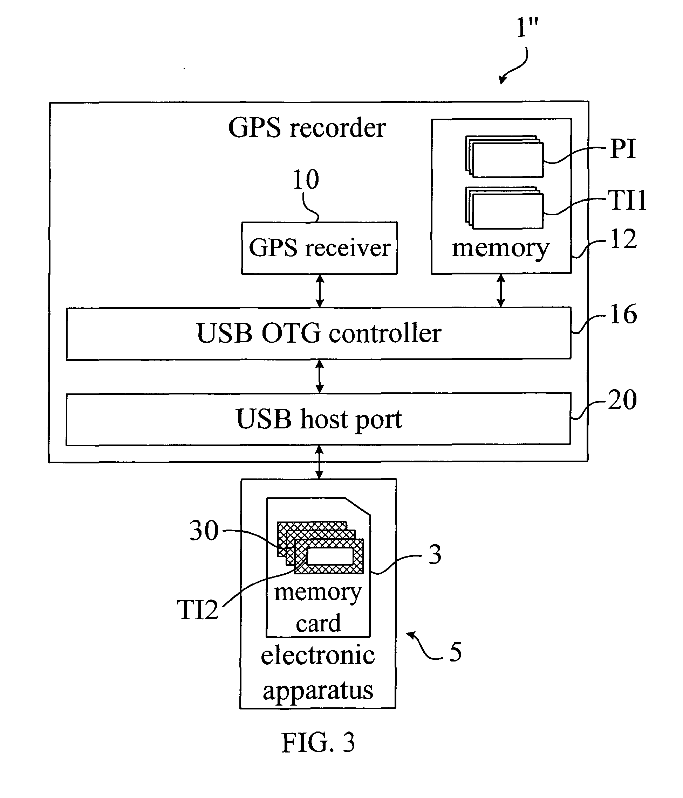

Please refer to FIG. 3. FIG. 3 is a functional block diagram illustrating a GPS recorder 1" according to another embodiment of the invention. The main difference between the GPS recorder 1" and the GPS recorder 1 is that the GPS recorder 1" comprises the USB host port 20 but does not comprise the card connector 14. The USB host port 20 is used for connecting with the electronic apparatus 5, such as a camera, a card reader and so on. The memory card 3 is installed in the electronic apparatus 5. When the electronic apparatus 5 is connected to the USB host port 20, the USB OTG controller 16 retrieves one of the time information TI1 from the memory 12 corresponding to the time information TI2 of an image file 30 and then attaches the positional information PI corresponding to the retrieved time information TI1 to the image file 30.

Compared to the prior art, according to the GPS recorder of the invention, the memory card therein storing image files can be directly connected to the GPS recorder, or an electronic apparatus with a memory card can be directly connected to the GPS recorder. That is to say, when a photo is taken by users, positional information can be immediately attached to the photo by utilizing the GPS recorder of the invention instead of a computer. It is very convenient for users.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A global positioning system (GPS) recorder comprising:
a GPS receiver for receiving a plurality of positional information and a plurality of first time information, each of the positional information corresponding to one of the first time information;
a memory for storing the positional information and the first time information;
a card connector for connecting with a memory card, wherein an image file with a second time information is stored in the memory card; and
a universal serial bus (USB) On-The-Go (OTG) controller, when the memory card is connected to the card connector, the USB OTG controller retrieving one of the first time information corresponding to the second time information and then attaching the positional information corresponding to the retrieved first time information to the image file.

2. The GPS recorder of claim 1, further comprising a GPS antenna coupled to the GPS receiver.

3. The GPS recorder of claim 1, wherein the memory is a non-volatile memory.

4. The GPS recorder of claim 3, wherein the non-volatile memory is a flash memory.

5. The GPS recorder of claim 1, wherein each of the positional information comprises a coordinate and/or a place name.

6. The GPS recorder of claim 1, wherein each of the first time information comprises a first date and/or a first time, and each of the second time information comprises a second date and/or a second time.

7. The GPS recorder of claim 1, further comprising a USB host port for connecting with an electronic apparatus, wherein the memory card is installed in the electronic apparatus.

8. The GPS recorder of claim 1, further comprising a battery for supplying power to the GPS recorder.

9. The GPS recorder of claim 1, further comprising a display module for displaying information related to the GPS recorder or the memory card.

10. The GPS recorder of claim 9, wherein the display module is a liquid crystal display.

11. A global positioning system (GPS) recorder comprising:
a GPS receiver for receiving a plurality of positional information and a plurality of first time information, each of the positional information corresponding to one of the first time information;
a memory for storing the positional information and the first time information;
a universal serial bus (USB) host port for connecting with an electronic apparatus, wherein a memory card is installed in the electronic apparatus, and an image file with a second time information is stored in the memory card; and
a USB On-The-Go (OTG) controller, when the electronic apparatus is connected to the USB host port, the USB OTG controller retrieving one of the first time information corresponding to the second time information and then attaching the positional information corresponding to the retrieved first time information to the image file.

12. The GPS recorder of claim 11, further comprising a GPS antenna coupled to the GPS receiver.

13. The GPS recorder of claim 11, wherein the memory is a non-volatile memory.

14. The GPS recorder of claim 13, wherein the non-volatile memory is a flash memory.

15. The GPS recorder of claim 11, wherein each of the positional information comprises a coordinate and/or a place name.

16. The GPS recorder of claim 11, wherein each of the first time information comprises a first date and/or a first time, and each of the second time information comprises a second date and/or a second time.

17. The GPS recorder of claim 11, further comprising a card connector, wherein the memory card is capable of being connected to the card connector directly.

18. The GPS recorder of claim 11, further comprising a battery for supplying power to the GPS recorder.

19. The GPS recorder of claim 11, further comprising a display module for displaying information related to the GPS recorder or the memory card.

20. The GPS recorder of claim 19, wherein the display module is a liquid crystal display.
